# EUROPÄISCHE PATENTSCHRIFT

(11) **EP 1 255 662 B1**
(45) Veröffentlichungstag und Bekanntmachung des Hinweises auf die Patenterteilung: **21.12.2005**
(21) Anmeldenummer: 00977595.8
(22) Anmeldetag: 29.11.2000
(51) Int. Cl.: B60N 3/10

(54) **HALTERUNG FÜR GETRÄNKEBEHÄLTER**
HOLDER FOR A DRINKS CONTAINER
SUPPORT POUR UN RESERVOIR DE BOISSONS

(30) Priorität: 18.02.2000 DE 10007594
(43) Veröffentlichungstag der Anmeldung: 13.11.2002
(73) Patentinhaber: fischerwerke Artur Fischer GmbH & Co. KG, 72178 Waldachtal (DE)
(72) Erfinder: SCHAAL, Falk, 72275 Alpirsbach (DE)
(86) Internationale Anmeldenummer: PCT/EP2000/011931
(87) Internationale Veröffentlichungsnummer: WO 2001/060657

(56) Entgegenhaltungen:
- EP-A- 0 778 175
- DE-C- 19 519 602
- DE-U- 29 507 949
- FR-A- 2 769 270
- US-A- 3 503 648
- US-A- 4 568 117
- US-A- 4 902 061
- US-A- 5 489 054

## Beschreibung

Die Erfindung betrifft eine Halterung für einen Getränkebehälter, wie beispielsweise eine Getränkedose, einen Becher oder eine Tasse, mit den Merkmalen des Oberbegriffs des Anspruchs 1.

Derartige Halterungen sind in einer nahezu unüberschaubaren Vielzahl an Ausführungen an sich bekannt. Eine Halterung für einen Getränkebehälter offenbart die US-A-4,568,117. Diese Druckschrift beschreibt einen prismatischen Körper, der vergleichbar einer Walze um eine horizontale Achse drehbar in einer oben offenen Aussparung einer Mittelkonsole eines Kraftwagens gelagert ist. Eine von drei Seiten des prismatischen Körpers weist drei Münzhalter für Parkmünzen auf, eine zweite Seite weist eine Vertiefung nach Art einer Ansenkung zum Einstellen eines Getränkebehälters auf. Die dritte Seite des prismatischen Körpers ist eben, befindet sie sich oben, ist die Aussparung der Mittelkonsole bündig verschlossen.

Eine weitere Halterung für einen Getränkebehälter offenbart die FR-A-2 769 270. Diese Halterung weist einen Schieber auf, der bogenförmig, nahezu horizontal, aus einer näherungsweise horizontalen Aussparung in einem Armaturenbrett herausschiebbar geführt ist. Der Schieber weist zwei nebeneinander angeordnete Löcher auf, die Kreisringe bilden, in die Getränkebehälter, beispielsweise Getränkedosen, einstellbar sind. Unterhalb des Schiebers ist ein ausziehbarer Aschenbecher untergebracht. Die Aussparung, d.h. das Einbaufach für den Schieber und den Aschenbecher, ist an einer Seite offen: Sind der Schieber und der Aschenbecher in die Aussparung geschoben, kann diese mit einem Deckel verschlossen werden.

Der Erfindung liegt die Aufgabe zugrunde, eine Halterung für einen Getränkebehälter platzsparend unterbringbar auszubilden.

Diese Aufgabe wird erfindungsgemäß durch die Merkmale des Anspruchs 1 gelöst. Die erfindungsgemäße Halterung weist eine Aufnahme zum Einstellen des Getränkebehälters auf, die als Aussparung beispielsweise in einem Armaturenbrett, einer Mittelkonsole oder einer Türverkleidung eines Kraftwagens, in der Rückenlehne eines Sitzes eines Omnibusses, Flugzeugs, Kinos etc. oder in Armlehnen derartiger Sitze ausgebildet ist. Die Aussparung ist zu einer Seite hin offen. Mit einer Führung ist ein Behältnis wie beispielsweise ein Ascherbecher, ein Ablagefach, ein Brillenetui an der Aussparung bewegbar angebracht. Das Behältnis lässt sich in eine Schließstellung und in eine Haltestellung verbringen. In der Schließstellung verschließt das Behältnis die Aussparung zum Einstellen des Getränkebehälters. In der Haltestellung verschließt das Behältnis die Aufnahme an der offenen Seite und lässt eine Einstellöffnung an der Oberseite der Aussparung frei, so dass der Getränkebehälter in die die Aufnahme bildende Aussparung einstellbar ist. Dabei ist es nicht notwendig, dass ein eingestellter Getränkebehälter am Umfang ununterbrochen von der Aussparung und dem Behältnis umschlossen ist, es genügt, wenn die Aussparung und das Behältnis den Getränkebehälter an einzelnen Stellen des Umfangs so umschließen, dass der Getränkebehälter nicht herausfallen kann.

Die Erfindung hat den Vorteil, dass die Halterung platzsparend beispielsweise in einem Armaturenbrett, einer Mittelkonsole oder einer Türverkleidung unterbringbar ist. Insbesondere lässt sich der von einem beispielsweise ohnehin vorhandenen Aschenbecher eingenommene Bauraum zusätzlich auch für die erfindungsgemäße Halterung für den Getränkebehälter verwenden, so dass die erfindungsgemäße Halterung keinen zusätzlichen Bauraum einnimmt. Weiterer Vorteil der Erfindung ist ein möglicher, einfacher Aufbau der erfindungsgemäßen Halterung mit beispielsweise einem einzigen, beweglichen Teil, nämlich dem Behältnis, an dem evtl. zusätzlich ein Deckel als zweites bewegliches Teil angebracht sein kann. Zusätzlicher Vorteil ist, dass diese Teile beispielsweise in Form eines Aschenbechers ohnehin vorgesehen sind, so dass keine zusätzlichen Herstellungs- und Montagekosten anfallen.

Eine einfache Art der Führung für das Behältnis ergibt sich bei einer Ausgestaltung der Erfindung durch Ausbildung als Schwenkführung mit einem Schwenklager für das Behältnis.

Bei einer Weiterbildung der Erfindung weist die Halterung eine Rasteinrichtung mit mehreren Raststellungen für das Behältnis auf. Dabei hält eine Raststellung das Behältnis in der Schließstellung und die weiteren Raststellungen halten das Behältnis in mehreren Haltestellungen, in denen das Behältnis unterschiedlich weit aus der die Aufnahme zum Einstellen des Getränkebehälters bildenden Aussparung heraus bewegt ist. Auf diese Weise ist die Einstellöffnung für den Getränkebehälter unterschiedlich groß, so dass Getränkebehälter unterschiedlichen Durchmessers kippsicher gehalten sind. Die erfindungsgemäße Rasteinrichtung hat den Vorteil einer einfachen Durchmesseranpassung der Halterung an unterschiedliche Getränkebehälter.

Bei einer Ausgestaltung der Erfindung ist eine Tropfschale zum Auffangen von Flüssigkeit vorgesehen, die aus einem in die Halterung eingestellten Getränkebehälter austritt. Die Tropfschale ist vorzugsweise am Behältnis angebracht.

In bevorzugter Ausgestaltung ist das Behältnis lösbar an der die Aufnahme für den Getränkebehälter bildenden Aussparung angebracht. Dadurch lässt sich zum einen die Tropfschale entleeren und reinigen und es lässt sich ebenso das Behältnis selbst leeren, was beispielsweise notwendig ist, wenn der Behälter ein Aschenbecher ist.

Bei einer Ausgestaltung der Erfindung bildet das Behältnis einen Aschenbecher.

Die Erfindung wird nachfolgend anhand zweier in der Zeichnung dargestellter Ausführungsbeispiele näher erläutert. Es zeigen:
- Figuren 1 bis 3: eine erfindungsgemäße Halterung in unterschiedlichen Stellungen in perspektivischer Darstellung aus verschiedenen Blickrichtungen;
- Figur 4: die Halterung aus Figuren 1 bis 3 in einem Mittelschnitt in einer Schließstellung;
- Figur 5: die Halterung aus Figur 4 in einer Haltestellung; und
- Figuren 6 und 7: eine abgewandelte Ausführungsform einer erfindungsgemäßen Halterung im Mittelschnitt in zwei verschiedenen Haltestellungen.

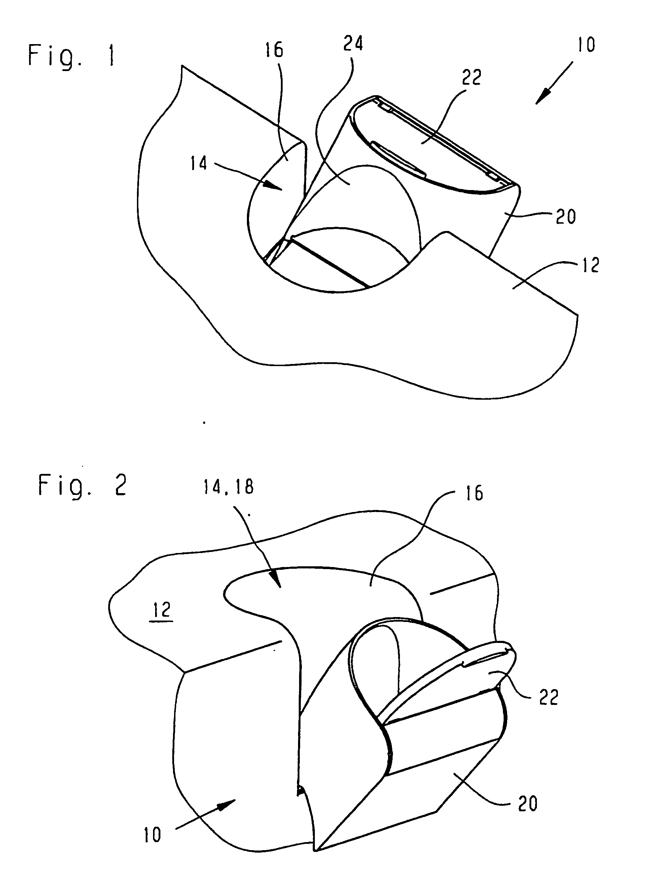

Die in Figuren 1 bis 3 dargestellte, erfindungsgemäße Halterung 10 für einen in Figuren 1 bis 3 nicht dargestellten Getränkebehälter ist beispielsweise in einem Armaturenbrett 12 eines im Übrigen nicht dargestellten Kraftwagens untergebracht. Vom Armaturenbrett 12 ist in der Zeichnung ein die Halterung 10 umgebendes Bruchteil dargestellt. Die Halterung 10 weist eine Aufnahme 14 zum Einstellen des Getränkebehälters auf, wobei die Aufnahme 14 als in einer Draufsicht U-förmige Aussparung 14 des Armaturenbretts 12 ausgebildet ist. Die Aussparung 14 ist an einer Oberseite offen, die offene Oberseite der Aussparung 14 bildet eine Einstellöffnung 18 zum Einstellen des Getränkebehälters in die Halterung 10. Des Weiteren ist die die Aufnahme 14 bildende Aussparung 14 zu einer Seite hin offen. Anstatt in einem Armaturenbrett 12 lässt sich die erfindungsgemäße Halterung 10 beispielsweise auch in einer Mittelkonsole, in einer Türverkleidung oder einer Armlehne unterbringen.

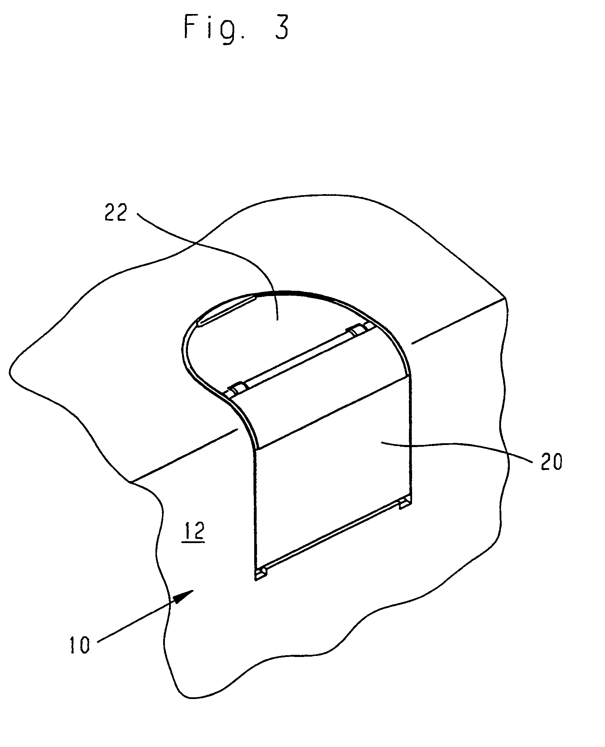

Mittels einer Führung ist ein Behältnis 20 bewegbar an der die Aufnahme zum Einstellen des Getränkebehälters bildenden Aussparung 14 angebracht. Das Behältnis 20 ist im dargestellten Ausführungsbeispiel ein Aschenbecher mit einem Klappdeckel 22 an seiner Oberseite. Der Aschenbecher 20 ist aus einer in Figur 3 dargestellten Schließstellung in eine in Figuren 1 und 2 dargestellte Haltestellung und umgekehrt bewegbar. In der Schließstellung verschließt der Aschenbecher 20 die Aussparung 14 an der offenen Seite sowie die Einstellöffnung 18 an der Oberseite der Aussparung 14. In der Schließstellung verschließt der Aschenbecher 20 die Aussparung 14 bündig mit angrenzenden Oberflächen des Armaturenbretts 12.

In der in Figuren 1 und 2 dargestellten Haltestellung ist der Aschenbecher 20 zur Seite aus dem Armaturenbrett 12 herausbewegt und gibt dadurch die Einstellöffnung 18 der Aussparung 14 frei. Zugleich verschließt der Aschenbecher 20 die offene Seite der Aussparung 14 so, dass ein eingestellter Getränkebehälter sicher gegen Herausfallen und Kippen in der Aussparung 14 gehalten ist. Dazu weist der Aschenbecher 20 eine konkave Wand 24 an seiner der Aussparung 14 zugewandten Seite auf. Der Klappdeckel 22 ist in jeder Stellung des Aschenbechers 20 öffenbar, so dass der Aschenbecher 20 sowohl in der Schließstellung als auch in der Haltestellung benutzbar ist.

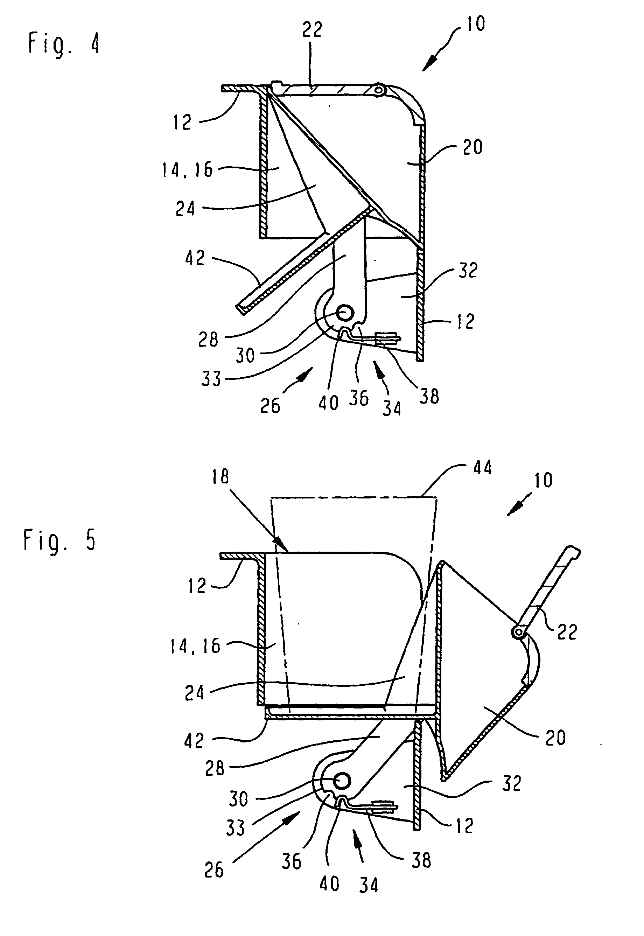

Die Führung des Aschenbechers 20 der erfindungsgemäßen Halterung 10 ist als Schwenkführung ausgebildet, sie weist ein Schwenklager 26 auf (Figur 4). Das Schwenklager 26 ist unterhalb des Aschenbechers 20 und der Aussparung 14 im Armaturenbrett 12 angeordnet. Der Aschenbecher 20 weist zwei nach unten abstehende, seitlich angeordnete Arme 28 auf, die mit einem Lagerloch an ihrem unteren Ende versehen sind, mit welchem sie auf Lagerzapfen 30 schwenkbar aufgesetzt sind. Die Lagerzapfen 30 sind unterhalb der Aussparung 14 an zwei seitlichen Laschen 32 des Armaturenbretts 12 vorgesehen, wobei die Laschen 32 von einer Innenseite des Armaturenbretts 12 nach innen abstehen. Durch das Schwenklager 26 ist der Aschenbecher 20 um eine gedachte, horizontale Achse unterhalb des Aschenbechers 20 schwenkbar.

Durch elastisches Zusammendrücken der Arme 28 des Aschenbechers 20 lassen sich die Arme 28 außer Eingriff von den Schwenkzapfen 30 bringen und der Aschenbecher 20 von der Halterung 10 lösen, um ihn beispielsweise leeren zu können. Im Bereich des Schwenklagers 26 ist eine Rasteinrichtung 34 ausgebildet, die den Aschenbecher 20 in der Schließstellung und in der Haltestellung hält. Zur Ausbildung der Rasteinrichtung 34 ist ein Stimrand 33 der Haltearme 28 kreisförmig und konzentrisch zu den Schwenkzapfen 30 ausgebildet. Im Umfang des Stimrandes 33 sind zwei muldenförmige Ausnehmungen 36 angebracht, die mit einer Blattfeder 38 zusammenwirken, die an den Laschen 32 des Armaturenbretts 12 befestigt ist. Ein freies Ende der Blattfeder 38 ist hakenförmig gebogen, wobei eine konvexe Seite des "Hakens" 40 federnd in einer der beiden Ausnehmungen 36 einliegt. Dabei liegt der Haken 40 in der Schließstellung des Aschenbechers 20 in einer der beiden Ausnehmungen 36 (Figur 4) und in der Haltestellung in der anderen Ausnehmung 36 (Figur 5) ein und hält dadurch rastend den Aschenbecher 20 in der jeweiligen Stellung. Durch Druck oder Zug am Aschenbecher 20 lässt sich der Haken 40 der Blattfeder 38 aus der Ausnehmung 36 des Arms 28 des Aschenbechers 20 herausdrücken und der Aschenbecher 20 auf diese Weise verschwenken.

An der konkaven, der Aussparung 14 zugewandten Wand 24 weist der Aschenbecher 20 eine Tropfschale 42 auf, die in der Haltestellung des Aschenbechers 20 horizontal ausgerichtet ist und die Aussparung 14 an der Unterseite schließt (Figur 5). Die Tropfschale 42 dient zum Aufstellen eines in Figur 5 mit Strichpunktlinien angedeuteten Getränkebehälters (Becher) 44, der in die die Aufnahme bildende Aussparung 14 der erfindungsgemäßen Halterung 10 eingestellt ist. Die Tropfschale 42 dient dazu, aus dem Becher 44 während der Fahrt austretende Flüssigkeit aufzufangen.

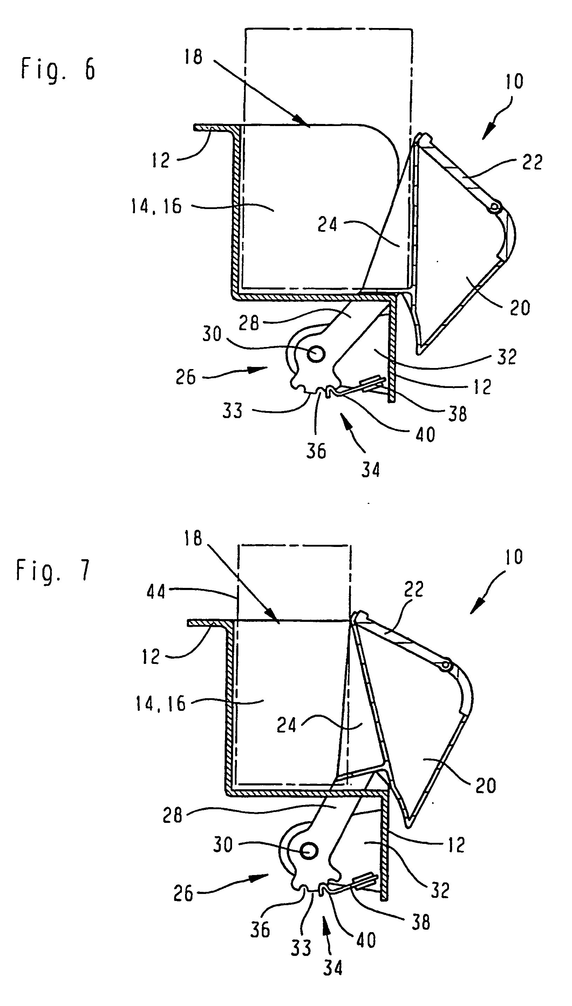

Figuren 6 und 7 zeigen eine abgewandelte Ausführungsform der in Figuren 1 bis 5 dargestellten und vorstehend erläuterten, erfindungsgemäßen Halterung 10. Hier weist der Aschenbecher 20 keine Tropfschale auf. Zudem weist die Rasteinrichtung 34 eine zusätzliche, in Figur 7 dargestellte Raststellung auf. Zur Ausbildung der zusätzlichen Raststellung ist im Stimrand 33 der Arme 28 des Aschenbechers 20 eine zusätzliche Ausnehmung 36 angebracht. In diese greift der Haken 40 der Blattfeder 38 ein, wenn der Aschenbecher 20 aus der in Figur 6 dargestellten Haltestellung ein Stück nach innen in Richtung der Schließstellung geschwenkt wird. In der zusätzlichen Raststellung befindet sich der Aschenbecher 20 in einer weiteren Haltestellung, er ist gegenüber Figur 6 nach innen geschwenkt und verkleinert die Einstellöffnung 18 der die Aufnahme für den Getränkebehälter 44 bildenden Aussparung 14 des Armaturenbretts 12. Auf diese Weise wird ein im Durchmesser kleinerer Getränkebehälter 44 sicher in der Aufnahme der erfindungsgemäßen Halterung 10 gehalten. Mit Ausnahme der vorstehenden Unterschiede ist die in Figuren 6 und 7 dargestellte Halterung 10 gleich ausgebildet und funktioniert in gleicher Weise wie die in Figuren 1 bis 5 dargestellte Halterung 10. Zur Vermeidung von Wiederholungen wird insoweit hinsichtlich Figuren 6 und 7 auf die Ausführungen zu Figuren 1 bis 5 verwiesen. Für gleiche Bauteile sind gleiche Bezugszahlen verwendet.

## Patentansprüche

1. Halterung für einen Getränkebehälter, mit einer Aufnahme zum Einstellen des Getränkebehälters, **dadurch gekennzeichnet, dass** die Aufnahme als Aussparung (14) ausgebildet ist, dass die Aussparung (14) zu einer Seite hin offen ist, und dass die Halterung (10) ein Behältnis (20) aufweist, das mit einer Führung (26) bewegbar an der Aussparung (14) angebracht ist, wobei das Behältnis (20) in eine Schließstellung, in der es die Aussparung (14) verschließt, und in eine Haltestellung, in der es die offene Seite der Aussparung (14) verschließt und eine Einstellöffnung (18) für den Getränkebehälter (44) an einer Oberseite der Aussparung (14) freigibt, verbringbar ist.

2. Halterung nach Anspruch 1, **dadurch gekennzeichnet, dass** die Führung (26) ein Schwenklager für das Behältnis (20) aufweist.

3. Halterung nach Anspruch 1, **dadurch gekennzeichnet, dass** die Halterung (10) eine Rasteinrichtung (34) aufweist, die das Behältnis (20) in mehreren Haltestellungen durch Rastung arretiert, wobei das Behältnis (20) in den verschiedenen Haltestellungen die Einstellöffnung (18) für den Getränkebehälter (44) in unterschiedlicher Größe freigibt.

4. Halterung nach Anspruch 1, **dadurch gekennzeichnet, dass** das Behältnis (20) eine Tropfschale (42) für den in die Aufnahme eingestellten Getränkebehälter (44) aufweist.

5. Halterung nach Anspruch 1, **dadurch gekennzeichnet, dass** das Behältnis (20) lösbar an der Aussparung (14) angebracht ist.

6. Halterung nach Anspruch 1, **dadurch gekennzeichnet, dass** das Behältnis (20) ein Aschenbecher ist.

## Claims

1. Holding device for a drinks container, having a receiving space for insertion of the drinks container, **characterised in that** the receiving space is in the form of a recess (14), **in that** the recess (14) is open towards one side, and **in that** the holding device (10) comprises a receptacle (20) that is movably mounted at the recess (14) by means of a guide (26), wherein the receptacle (20) is arranged to be brought into a closed position, in which it closes the recess (14), and into a holding position, in which it closes the open side of the recess (14) and opens up an insertion opening (18) for the drinks container (44) at an upper side of the recess (14).

2. Holding device according to claim 1, **characterised in that** the guide (26) comprises a pivot bearing for the receptacle (20).

3. Holding device according to claim 1, **characterised in that** the holding device (10) comprises a locking device (34), which locks the receptacle (20) in several holding positions by interlocking engagement, wherein the receptacle (20) in the different holding positions opens up the insertion opening (18) to different sizes for the drinks container (44).

4. Holding device according to claim 1, **characterised in that** the receptacle (20) comprises a drip tray (42) for the drinks container (44) inserted in the receiving space.

5. Holding device according to claim 1, **characterised in that** the receptacle (20) is detachably mounted at the recess (14).

6. Holding device according to claim 1, **characterised in that** the receptacle (20) is an ashtray.

## Revendications

1. Support pour un conteneur de boissons, muni d'un logement destiné à l'insertion dudit conteneur de boissons, **caractérisé par le fait que** ledit logement est réalisé sous la forme d'une échancrure (14) ; **par le fait que** ladite échancrure (14) est ouverte vers un côté ; et **par le fait que** le support (10) comporte un réceptacle (20) implanté de façon mobile sur l'échancrure (14), à l'aide d'un guide (26), ledit réceptacle (20) pouvant être déplacé jusqu'à une position de fermeture dans laquelle il obture l'échancrure (14), et à une position de retenue dans laquelle il obture la face ouverte de ladite échancrure (14), et dégage un orifice (18) d'insertion du conteneur de boissons (44), à une face supérieure de ladite échancrure (14).

2. Support selon la revendication 1, **caractérisé par le fait que** le guide (26) présente un palier de pivotement affecté au réceptacle (20).

3. Support selon la revendication 1, **caractérisé par le fait que** ledit support (10) comporte un dispositif d'encliquetage (34) qui arrête le réceptacle (20) dans plusieurs positions de retenue, par effet de déclic, ledit réceptacle (20) dégageant, dans les différentes positions de retenue, l'orifice (18) présentant des tailles différentes pour l'insertion du conteneur de boissons (44).

4. Support selon la revendication 1, **caractérisé par le fait que** le réceptacle (20) comporte une cuvette de dégouttage (42) destinée au conteneur de boissons (44) inséré dans le logement.

5. Support selon la revendication 1, **caractérisé par le fait que** le réceptacle (20) est implanté amoviblement sur l'échancrure (14).

6. Support selon la revendication 1, **caractérisé par le fait que** le réceptacle (20) est un cendrier.
